# EUROPEAN PATENT APPLICATION

(11) **EP 4 633 083 A1**
(43) Date of publication of application: **15.10.2025**
(21) Application number: 24315142.0
(22) Date of filing: 10.04.2024
(51) Int. Cl.: H04L 9/08, H04L 9/32

(54) **METHOD FOR GENERATING A CRYPTOGRAPHIC ALGORITHM**

(71) Applicant: Orange, 92130 Issy-les-Moulineaux (FR)
(72) Inventor: Plesa, Mihail, 020334 BUCHAREST (RO); Macario-Rat, Gilles, 92326 CHATILLON CEDEX (FR)
(74) Representative: Ernest Gutmann - Yves Plasseraud S.A.S.

(57) **Abstract**

A method (100) for generating a cryptographic algorithm for secure communication between at least two communication devices (CD1, CD2), the method (100) comprising:
- sending (101), by a communication device (CL1) among the at least two communication devices (CD1, CD2), an identifier (ID) assigned to the communication device (CD1) to a cryptographic algorithm generation device (GD) ; and
- receiving (105), by the communication device (CD1), a cryptographic algorithm generated by the cryptographic algorithm generation device (GD), the cryptographic algorithm comprising a sequence of functions (SEQU_FUNC) derived from the identifier (ID).

## Description

The present disclosure generally belongs to the field of cryptographic algorithms.

More precisely, the present disclosure relates to a method for generating a cryptographic algorithm for secure communication between at least two communication devices.

### Background of the disclosure

Devices that communicate with each other, hereafter referred to as communication devices, often use means of authentication and means for ensuring confidentiality of data exchanged between the communication devices. These means are often only weakly protected.

A communication device typically includes a computing unit and a program installed on the computing unit. The program can implement cryptographic algorithms and cryptographic keys, deemed not to be disclosed or observable by unauthorized third parties. The access to the program is protected and only accessible by password or smart card for example.

A common approach is to deploy the same cryptographic algorithm on many different communication devices, and to provide confidentiality of exchanged data by using differerent cryptographic keys, wherein each cryptographic key may be specific to a given communication device or to a given communication channel between communication devices.

The problem of this approach is that effective attacks, commonly called hidden channel attacks, possibly coupled with fault attacks, so called because they derive information indirectly from observations of phenomena emanating from the communication devices, such as their power consumption, their electromagnetic radiation, and characteristic quantities such as duration, amplitude and frequency, may reveal the internal functioning of communication devices.

Based on the information gained from such attacks, an attacker may carry out reverse engineering and obtain a functional description of the cryptographic algorithm. Subsequently, by modeling the interactions between the cryptographic algorithm, cryptographic keys and manipulated data, the attacker may be able to focus on the cryptographic keys, so that after an initial investment, extracting a cryptographic key from any communication device may be possible.

Accordingly, a need exists for a method that provides a cryptographic algorithm that improves the security of communicating devices, in particular during authentication or exchange of data.

### Summary

The present disclosure remedies the shortcomings of prior art.

It is disclosed a method for generating a cryptographic algorithm for secure communication between at least two communication devices, the method comprising:
- sending, by a communication device among the at least two communication devices, an identifier assigned to the communication device to a cryptographic algorithm generation device ; and
- receiving, by the communication device, a cryptographic algorithm generated by the cryptographic algorithm generation device, the cryptographic algorithm comprising a sequence of functions derived from the identifier.

Communication devices may be any kind of devices capable of exchanging data with each other.

The cryptographic algorithm generation device may be any kind of device configured to receive an identifier and to generate a cryptographic algorithm comprising a sequence of functions based on the identifier.

The identifier may be an intrinsic identifier of the communication device, such as a hardware serial number.

The cryptographic algorithm may contain information regarding the sequence of functions, in order to be able to encrypt a given plaintext to obtain a ciphertext, and information regarding the inverse sequence of functions (which may be determined by inverting the sequence of functions), in order to perform the inverse operation, i.e. in order to decrypt the ciphertext to obtain the plaintext.

The sequence of functions may comprise a plurality of functions, wherein each function may act on a different portion/ different portions of the plaintext/ ciphertext.

The proposed method provides a cryptographic algorithm that increases the security of communication devices when the communication devices use means of authentication or when they exchange data.

The increased security is achieved by incorporating a sequence of functions in a singular way in the cryptographic algorithm, i.e. the generated cryptographic algorithm will be unique and encrypt! decrypt differently than any other cryptographic algorithm. The cryptographic algorithm may be specific to one or more communication devices and/ or to one or more specific communication channels between communication devices. Therefore, even when a hacker manages to access the sequence of functions of a given cryptographic algorithm, no knowledge about the functioning of other cryptographic algorithms is gained. The overall damage is therefore limited to the specific cryptographic algorithm that has been hacked.

The proposed method is innovative in that the cryptographic algorithm is generated specifically for one or more specific communication devices, based on the identifier of the communication device(s). The sequence of function that will be used to encrypt! decrypt data is derived from the identifier of the communication device(s). The identifier being unique, the derived sequence of functions and hence the resulting cryptographic algorithm is also unique.

In an embodiment, generating the cryptographic algorithm by the cryptographic algorithm generation device may comprise:
- generating a sequence of symbols, based on the identifier;
- selecting, based on the sequence of symbols, a sequence of functions;
- generating the cryptographic algorithm comprising the sequence of functions.

A symbol may refer to numbers, in particular to integers, to letters of any alphabet or to emojis for example.

The sequence of symbols may be generated by a pseudorandom number generator, using the identifier as input.

The transformation of the identifier into a sequence of symbols ensures that identifiers of different length and comprising different kinds of symbols are transferred to a common reference system, i.e. into a sequence of symbols, based on which the sequence of functions may then be constructed.

The length of the sequence of symbols can be adapted according to the specifics of the implementation.

A received identifier, such as "V32934L5", may be transformed according to predefined instructions into a sequence of symbols, such as (4, 12, 1, 9), from which a sequence of functions may be derived, such as (f₄, f₁₂, f₁, f₉), according to predefined instructions.

In an embodiment, determining the sequence of functions may comprise:
- selecting, in a group of functions, a function for each symbol among the sequence of symbols.

In particular, in the case wherein each function in the group of functions is assigned to a symbol among a plurality of symbols, the functions assigned to each symbol among the sequence of symbols are selected.

The functions in the group of functions may be sorted with respect to the symbols. For example, in the group of functions, a function "f₁" may be assigned to a symbol "x₁", a function "fz" may be assigned to a symbol "x₂", etc.

For example, the group of functions may be sorted in a list of two columns, wherein one column comprises symbols and the other column comprises functions. For each symbol in the sequence of symbols, the corresponding function can be looked up in the list, and a sequence of functions may be constructed.

The mapping of a symbol to a function ensures that the resulting sequence of functions is unique for a given sequence of symbols and hence for a given identifier.

In an embodiment, determining a sequence of functions may comprise:
- selecting, in a sequence of groups of functions, a function for each symbol among the sequence of symbols.

In particular, in the case wherein each function in the group of functions is assigned to a symbol among a plurality of symbols, the functions assigned to each symbol among the sequence of symbols are selected.

Here, the sequence of functions is not constructed based on a single group of functions, but on a plurality of groups of functions.

Each group of functions may comprise a plurality of functions. In each group, the functions may be sorted with respect to the symbols, i.e. each function in each group of functions is assigned to a symbol among a plurality of symbols.

In addition, the groups of functions may be sorted. Based on the order of the groups, it may be decided in which group a function for a given symbol is to be selected.

A function may then be selected for each symbol among the sequence of symbols, according to an order of the sequence of groups of functions and according to an order of the sequence of symbols.

For example, when selecting a function for the n-th symbol in the sequence of symbols, the function assigned to said symbol may be selected in the n-th group.

The use of a sequence of groups of functions increases the security and minimizes even more the risk of reverse engineering.

In an embodiment, the sequence of symbols may comprise a sequence of integers, wherein each function among the group(s) of functions is assigned to an integer among a plurality of integers, and wherein a function is selected among the group(s) of functions for each integer among the sequence of integers.

For example, a sequence of integers may have the following form: (4, 12, 1, 9), which may lead to a sequence of functions of (f₄, f₁₂, f₁, f₉).

In an embodiment, generating a sequence of symbols may comprise selecting a value of each symbol of the sequence of symbols among n(k) possible values, wherein n(k) is function of a number k of symbols contained in the sequence of symbols.

For example, n(k) may be chosen to be n(k) = 2ⁿ.

In the case of an identifier comprising four values, each value may then be chosen among 4² = 16 values, e.g. in the range 1, 2, 3 ..., 15, 16.

The relation n(k) may be chosen such that the determination of the sequence of symbols by the communication device occurs with maximum efficiency.

In an embodiment, the sequence of symbols is generated by a key derivation function, based on the identifier.

A key derivation function may be an algorithm that derives the sequence of symbols from the identifier by using a pseudorandom function, such as a block cipher or a cryptographic hash function.

A key derivation function may allow determining a sequence of symbols that is unique for a given identifier.

In an embodiment, the cryptographic algorithm is generated by compiling and assembling the selected sequence of functions.

The resulting cryptographic algorithm may be a "black box", i.e. a given communication device may be able to apply the cryptographic algorithm without knowing the sequence of functions that the cryptographic algorithm contains.

In an embodiment, each function comprises one or more logical operators.

Logical operators comprise operators such as ADD, SUB, MUL, INC, DEC, XOR, OR, AND. The logical operators may act on different portions of a plaintext to be encrypted and/or of a ciphertext to be decrypted.

Cryptographic algorithms based on different logical functions or different combinations of logical functions may have different but still similar operating profiles. Therefore, an attacker may have difficulties in deriving the exact sequence of functions from an attack.

Another aspect of the present disclosure is related to a method for establishing a communication channel between the at least two communication devices, comprising:
- receiving, by the communication device, a cryptographic algorithm generated according to the method as described above;
- receiving, by at least one other communication device among the at least two communication devices, the cryptographic algorithm and/ or information regarding the sequence of functions;
- establishing a communication channel between the at least two communication devices, by applying, by the communication device, the cryptographic algorithm, and by applying, by said at least one other communication device, the cryptographic algorithm and/ or the information regarding the sequence of functions.

The method allows establishing a secure communication channel between the at least two communication devices, wherein "establishing a communication channel" may involve at least one of performing authentication by one or more communication devices, encrypting data and/or decrypting data for secure exchange of data between the communication devices.

It is not required that each of the involved communication devices has access to the cryptographic algorithm. It is sufficient that a respective communication device has access to the information contained by the cryptographic algorithm, i.e. to the sequence of functions or to the inverse sequence of functions.

"Information regarding the sequence of functions" may refer to the group(s) of functions based on which the algorithm is generated. Indeed, a communication device having access to the group(s) of functions may derive, based on the identifier, the sequence of functions.

The group(s) of functions may be provided to one or more communication devices, which may then, based on the group(s) of functions and on the identifier, derive the sequence of symbols and the sequence of functions, and encrypt any plaintext in the same way as the cryptographic algorithm would do.

When seeking to encrypt data, the sequence of functions may be determined and be applied. When seeking to decrypt data, the derived sequence of functions may be inverted, and the inverted sequence of functions may be applied.

When two or more communication devices are communicating, wherein each device has a different identifier, the identifier of a communication device may be chosen for generating the cryptographic algorithm for the communication between the communication devices.

The communication devices may both receive the cryptographic algorithm/ the information regarding the sequence of functions from the cryptographic algorithm generation device. In a variant, one communication device may receive the cryptographic algorithm, and then "clone" (or copy) it in a secure environment for the other communication device(s).

In an embodiment, establishing the communication channel may comprise:
- receiving, by each communication device, an authentication plaintext;
- obtaining a first authentication ciphertext by applying, by a communication device among the at least two communication devices, the cryptographic algorithm to the authentication plaintext, and obtaining a second authentication ciphertext by applying, by at least one other communication device among the at least two communication devices, the cryptographic algorithm and/ or the information regarding the sequence of functions to the authentication plaintext;
- authenticating the communication channel between the at least two communication devices by comparing the first authentication ciphertext to the second authentication ciphertext.

"Authentication plaintext" may refer to any plaintext that is used for authentication.

"Authentication ciphertext" may refer to any ciphertext obtained from the authentication plaintext by application of the cryptographic algorithm/ the information regarding the sequence of functions.

Successful comparison of the first authentication ciphertext to the second authentication ciphertext, i.e. if the first authentication ciphertext matches the second authentication ciphertex, may indicate that the involved communication have access to the cryptographic algorithm and that they apply correctly the cryptographic algorithm.

In an embodiment, establishing the authentication channel may comprise:
- receiving, by each communication device, a key-generating plaintext;
- determining, by a communication device among the at least two communication devices, a cryptographic key, by applying the cryptographic algorithm to the key-generating plaintext;
- determining, by at least one other communication device among the at least two communication devices, the cryptographic key by applying the cryptographic algorithm and/ or the information regarding the sequence of functions to the key-generating plaintext;
- using the cryptographic key for establishing a communication channel between the at least two communication devices.

"Key-generating plaintext" may refer to any plaintext that is used for generating a cryptographic key.

The key-generating plaintext may be exchanged between the communication devices without any encryption. However, only the communication devices having access to the cryptographic algorithm/ the information regarding the sequence of functions may be able to determine the cryptographic key based on the key-generating plaintext. Therefore, the cryptographic key is only known to these communication devices, which can therefore be used as a cryptographic key.

In an embodiment, establishing the communication channel may comprise:
- obtaining a key ciphertext by applying, by a communication device among the at least two communication devices the cryptographic algorithm and/ or the information regarding the sequence of functions to a key plaintext;
- sending, by said communication device, the key ciphertext to at least one other communication device among the at least two communication devices;
- obtaining, by said at least one other communication device, a decrypted key ciphertext, by applying the cryptographic algorithm and/ or the information regarding the sequence of functions to the key ciphertext;
- authenticating a communication channel between the at least two communication devices by comparing the decrypted key ciphertext to the key plaintext.

"Key plaintext" may refer to any plaintext that is used for authentication.

"Key ciphertext" may refer to any ciphertext obtained from the authentication plaintext by application of the cryptographic algorithm/ the information regarding the sequence of functions.

Successful comparison of the decrypted key ciphertext to the key plaintext, i.e. if the decrypted key ciphertext matches the key plaintext ciphertex, may indicate that the involved communication devices have access to the cryptographic algorithm and that they apply correctly the cryptographic algorithm.

In an embodiment, establishing the communication channel may comprise:
- obtaining a content ciphertext by applying, by a communication device among the at least two communication devices, the cryptographic algorithm and/ or the information regarding the sequence of functions to the content plaintext;
- sending, by said communication device, the content ciphertext to at least one other communication device among the at least two communication devices,
- obtaining the content plaintext by applying, by said at least one other communication device, the cryptographic algorithm and/ or the information regarding the sequence of functions to the content ciphertext.

"Content plaintext" may refer to any plaintext representative of information to be exchanged between the communication devices.

"Content ciphertext" may refer to any ciphertext obtained from the content plaintext by application of the cryptographic algorithm/ the information regarding the sequence of functions.

Since only a communication device having access to the cryptographic algorithm is able to decrypt the content ciphertext, unauthorized communication devices are not able to access the content plaintext, can confidential data can be transmitted.

Another aspect of the present disclosure is related to a computer program product comprising instructions which, when the instructions are executed by a processing unit, cause the processing circuit to implement any of the methods described above.

This program can use any programming language (for example, an object-oriented language or other), and be in the form of interpretable source code, partially compiled code, or fully compiled code.

Another aspect of the disclosure is related to a cryptographic algorithm generation device configured to generate a cryptographic algorithm for secure communication between at least two communication devices, comprising:
- an interface configured to receive an identifier assigned to a communication device among the at least two communication devices;
- a circuit configured to generate a cryptographic algorithm for secure communication between said at least two communication devices, the cryptographic algorithm comprising a sequence of functions derived from the identifier.

In an embodiment, the cryptographic algorithm generation device further comprises:
- an interface configured to send the cryptographic algorithm to the communication device.

Another aspect of the disclosure is related to a communication device, comprising:
- an interface configured to send an identifier assigned to the communication device to a cryptographic algorithm generation device;
- an interface configured to receive, from the cryptographic algorithm generation device, a cryptographic algorithm generated by the cryptographic algorithm generation device, the cryptographic algorithm comprising a sequence of functions derived from the identifier.

The cryptographic algorithm generation device may refer to any kind of device configured to receive an identifier and to generate a cryptographic algorithm comprising a sequence of functions. For example, the cryptographic algorithm generation device may be a server or any kind of dedicated computer.

The communication device mentioned above may refer to any kind of device seeking to exchange information with other communication devices.

The communication device may establish a communication channel with other communication devices, by applying the cryptographic algorithm.

The cryptographic algorithm generation device may generate a cryptographic algorithm that increases the security of communication devices when they use means of authentication or when they exchange data.

The increased security is achieved by incorporating a sequence of functions in a singular way in the cryptographic algorithm, i.e. the generated cryptographic algorithm will be unique and encrypt/ decrypt differently than other cryptographic algorithms. Therefore, even when a hacker manages to access the sequence of functions of the cryptographic algorithm, no knowledge about the functioning of other cryptographic algorithms is gained. The overall damage is therefore limited to the specific cryptographic algorithm that has been hacked.

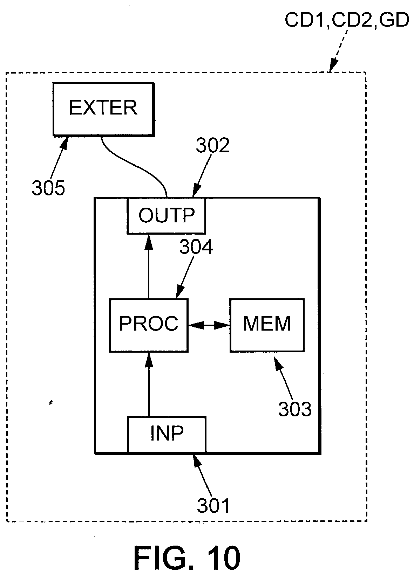

Fig. 10 described in detail below shows the main components of a cryptographic algorithm generation device/ a communication device.

### Brief Description of Drawings

Other features, details and advantages will be shown in the following detailed description and on the figures, on which:
**Fig. 1**

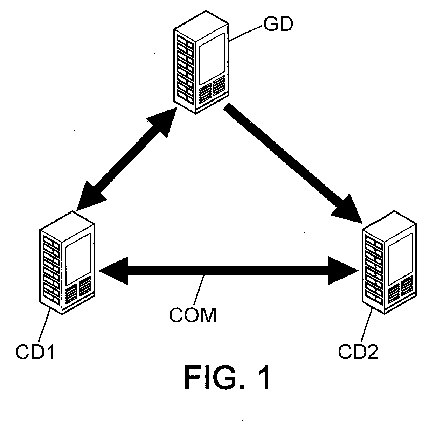

   [Fig. 1] shows an arrangement of a cryptographic algorithm generation device and two communication devices according to the present disclosure.
**Fig. 2**

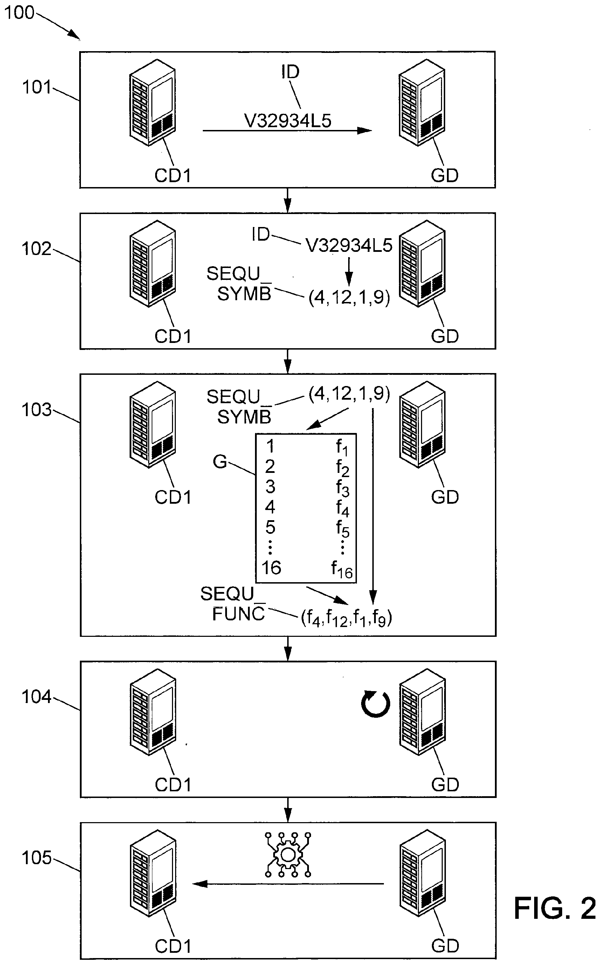

   [Fig. 2] shows a flowchart of a method for generating a cryptographic algorithm, carried out by a cryptographic algorithm generation device and based on the identifier of a communication device.
**Fig. 3**

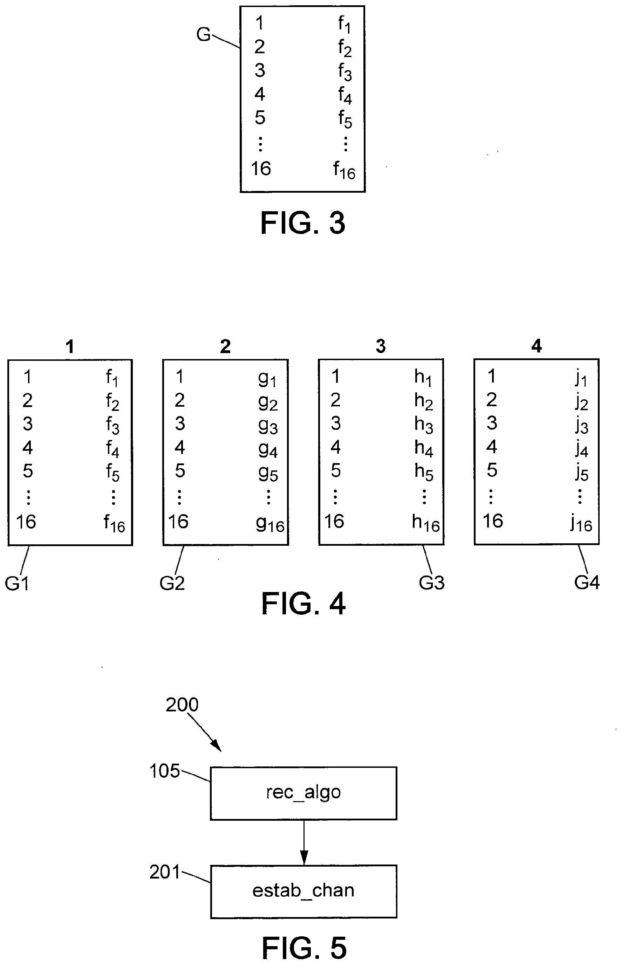

   [Fig. 3] shows a group of functions as used in the method for generating a cryptographic algorithm of figure 2.
**Fig. 4**
   [Fig. 4] shows a sequence of groups of functions as used in the method for generating a cryptographic algorithm of figure 2.
**Fig. 5**
   [Fig. 5] shows a flow chart of a method for establishing a communication channel between at least two communication devices.
**Fig. 6**

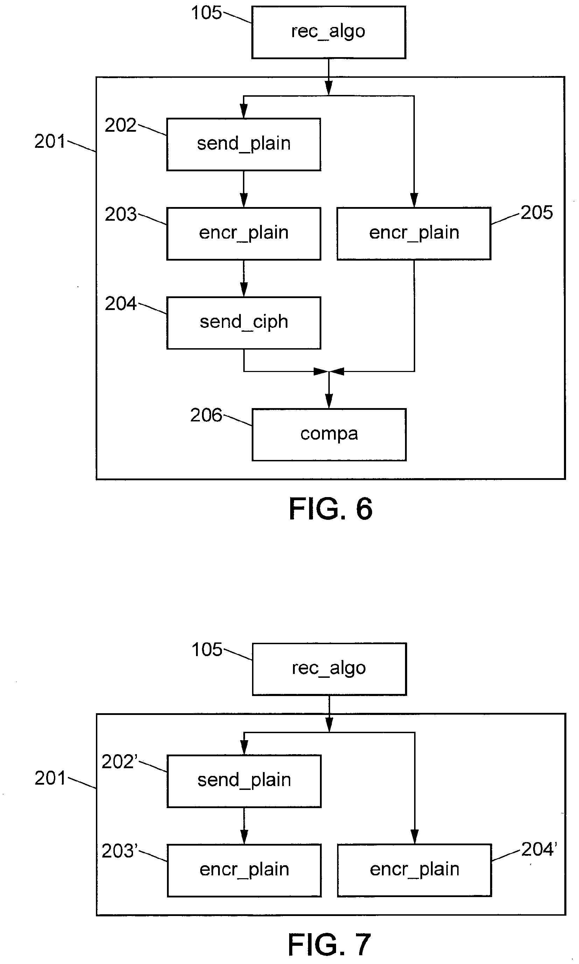

   [Fig. 6] shows a first embodiment of the method for establishing a communication channel between the at least two communication devices of figure 5.
**Fig. 7**
   [Fig. 7] shows a second embodiment of the method for establishing a communication channel between the at least two communication devices of figure 5.
**Fig. 8**

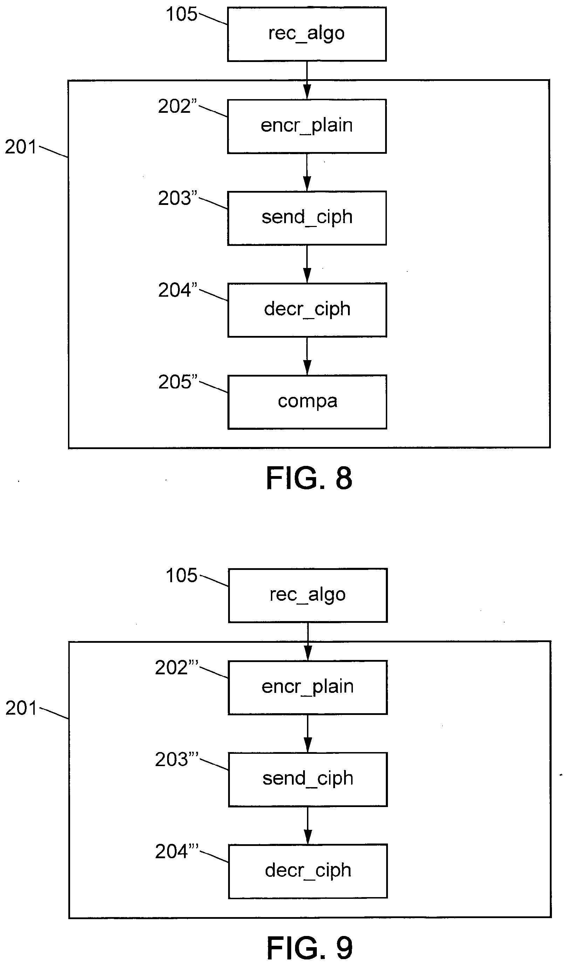

   [Fig. 8] shows a third embodiment of the method for establishing a communication channel between the at least two communication devices of figure 5.
**Fig. 9**
   [Fig. 9] shows a fourth embodiment of the method for establishing a communication channel between the at least two communication devices of figure 5.
**Fig. 10**
   [Fig. 10] shows an embodiment of a communication device/ of a cryptographic algorithm generation device.

### Description of Embodiments

In the following, a method for generating a cryptographic algorithm for secure communication between at least two devices, hereafter referred to as communication devices, is presented. The method may be implemented according to several embodiments.

**Figure 1** shows a possible arrangement of devices for which the method may be implemented. Two communication devices CD1, CD2 seek to establish a communication channel COM. Therefore, a communication device CD1 may send an identifier of the communication device CD1 to a cryptographic algorithm generation device GD, also referred to as dedicated device, which may then generate a cryptographic algorithm based on the identifier.

The communication algorithm generation device GD may be, as shown in figure 1, an individual device different from the communication devices CD1, CD2.

In a variant not shown in this figure 1, a communication device CD1, CD2 may act as communication algorithm generation device GD.

The generated cryptographic algorithm may be sent to the two communication devices CD1, CD2, which may then perform authentication or communicate by exchanging encrypted data and/or decrypt data by use of the cryptographic algorithm.

A flowchart of the method 100 for generating the cryptographic algorithm is shown in **figure 2****.**

The communication device CD1 may send (step 101) its identifier ID to the cryptographic algorithm generation device GD.

In one embodiment, the identifier ID may be an intrinsic identifier of the communication device CD1, such as a hardware serial number of the communication device CD1.

In another embodiment, the identifier ID may be assigned to the communication device CD1 by the cryptographic algorithm generation device GD. For example, the cryptographic algorithm generation device GD may increase an internal counter for each new communication device seeking to obtain a specific cryptographic algorithm, and assign the identifier ID to a respective communication device based on a current value of the internal counter.

The identifier ID may be composed of numbers, letters and other kinds of symbols. For example, the identifier ID may have the following form: "V32934L5".

The cryptographic algorithm generation device GD may then generate (step 102) a sequence of symbols SEQU_SYMB in a desired format based on the identifier ID, by applying a key derivation function to this identifier ID. Applying the key derivation function may involve applying a pseudorandom function, such as a cryptographic hash function or a block cipher, to the identifier ID.

For example, a sequence of symbols SEQU_SYMB may have the following form: (4, 12, 1, 9). In this example, the sequence of symbols SEQU_SYMB is a sequence of integers.

When determining the sequence of symbols SEQU_SYMB from the identifier ID, each value of a symbol of the sequence of symbols SEQU_SYMB may be selected among n(k) possible values, wherein n(k) is function of a number k of symbols in the sequence of symbols SEQU_SYMB.

In one embodiment, n(k) may be chosen to be equal to n(k) = 2^{k}.

In the mentioned example, the sequence of symbols SEQU_SYMB (4, 12, 1, 9) comprises four integers, and each value of each of the four integers may be selected among sixteen 2⁴=16 possible values, e.g. among 1, 2, 3..., 15, 16.

The transformation of the identifier ID into a sequence of symbols SEQU_SYMB ensures that identifiers of different length and comprising different kinds of symbols are transferred to a common reference system, i.e. into a sequence of symbols SEQU_SYMB, based on which a sequence of functions SEQU_FUNC may then be constructed.

The sequence of symbols SEQU_SYMB may then be used to select (step 103) a sequence of functions SEQU_FUNC in a group G of functions. The functions in the group G of functions may be sorted, wherein each function in the group G of functions may be assigned to a symbol among a plurality of symbols.

For example, the group of functions G may be list of functions having two columns, wherein one column comprises symbols and the other column comprises functions. For each symbol in the sequence of symbols SEQU_SYMB, the corresponding function can be looked up in the list, and a sequence of functions SEQU_FUNC may be constructed.

An example of such a group G of functions is shown in **figure 3****.**

A sequence of functions SEQU_FUNC corresponding to the sequence of symbols SEQU_SYMB may be selected in the group of functions, wherein the order of the functions in the obtained sequence of functions SEQU_FUNC may be defined by the order of the symbols in the sequence of symbols SEQU_SYMB.

In the mentioned example of the sequence of symbols SEQU_SYMB being (4, 12, 1, 9), the 4^{th} function (i.e. f₄) in the group G of functions, assigned to the integer 4, may be first selected, the 12^{th} function (i.e. f₁₂) in the group G of functions, assigned to the integer 12, may be then selected, the 1^{st} function (i.e. f₁) in the group G of functions, assigned to the integer 1, may be then selected and finally the 9^{th} function (i.e. f₉) in the group G of functions, assigned to integer 9, may be selected.

The obtained sequence of functions SEQU_FUNC may therefore be (f₄, f₁₂, f₁, f₉).

The mapping of a symbol to a function in the group of functions ensures that the resulting sequence of functions SEQU_FUNC is unique for a given identifier ID.

In a variant, the sequence of functions SEQU_FUNC may be selected in a sequence of groups G1, G2, G3, G4 of functions. An example of such a sequence of groups G1, G2, G3, G4 of functions is shown in **figure 4****.**

Each group G1, G2, G3, G4 of functions among the sequence of groups G1, G2, G3, G4 of functions may comprise a plurality of functions. The functions in each group G1, G2, G3, G4 of functions may be sorted, i.e. each function in each group G1, G2, G3, G4 of functions may be assigned to a symbol among a plurality of symbols. In addition, the groups G1, G2, G3, G4 of functions may be sorted.

A function may then be selected for each symbol among the sequence of symbols SEQU_SYMB, wherein the group of functions among the sequence of groups G1, G2, G3, G4 in which the respective function for a given symbol is selected, may be chosen based on a position of the symbol in the sequence of symbols SEQU_SYMB.

For example, each group of functions G1, G2, G3, G4 may be list of functions having two columns, wherein one column comprises symbols and the other column comprises functions. For each symbol in the sequence of symbols SEQU_SYMB, the corresponding function can be looked up in the list, and a sequence of functions SEQU_FUNC may be constructed.

In the mentioned example of the sequence of symbols SEQU_SYMB being (4, 12, 1, 9), when selecting a sequence of functions SEQU_FUNC in a sequence of groups G1, G2, G3, G4 of functions, the functions may be selected as follows:
- the function assigned to the integer "4" may be selected in the first group G1 (because "4" is the first element in the sequence of symbols SEQU_SYMB),
- the function assigned to the integer "12" may be selected in the second group G2 (because "12" is the second element in the sequence of symbols SEQU_SYMB);
- the function assigned to the integer "1" may be selected in the third group G3 (because "1" is the third element in the sequence of symbols SEQU_SYMB),
- the function assigned to the integer "9" may be selected in the fourth group G4 (because "9" is the fourth element in the sequence of symbols SEQU_SYMB).

In such a case, the resulting sequence of functions may then be (f₄, g₁₂, h₁, j₉), where fᵢ refer to the functions of the first group, gᵢ refer to the functions of the second group, hᵢ refer to the functions of the third group and jᵢ refer to the functions of the fourth group.

The selection of the sequence of function SEQU_FUNC in several groups of functions G1, G2, G3, G4 increases the security and minimizes even more the risk of reverse engineering.

Other types of symbols may be chosen for the sequence of symbols SEQU_SYMB and the group(s) G, G1, G2, G3, G4 of functions. For example, letters may be chosen instead of integers, and the sequence of symbols SEQU_SYMB may be a sequence of letters, such as (F, B, C, M). The sequence of functions SEQU_FUNC would then be (f_{F}, fe, fc, f_{M}), when selected in one group G of functions, or (f_{F}, gs, he, j_{M}) when selected in several groups of functions G1, G2, G3, G4.

Each function may comprise one or more logical operators. In particular, logical operators such as ADD, SUB, MUL, INC, DEC, XOR, OR, AND may be used. When encrypting a given plaintext, respectively decrypting a given ciphertext, these logical operators may then act on a different portion/ different portions of the plaintext to be encrypted, respectively of the ciphertext to be decrypted.

However, functions other than logical operators may be used.

The cryptographic algorithm may then be generated (step 104), by compiling and assembling the sequence of functions SEQU_FUNC.

The obtained cryptographic algorithm may be sent (step 105) to the communication device CD1. The algorithm may be further sent to the other communication device CD2 and be used for secure communication between the two communication devices CD1, CD2.

In the method 100 of figure 2, the cryptographic algorithm generation device GD may, in addition to the cryptographic algorithm or as an alternative to the cryptographic almgorithm, send information regarding the sequence of functions SEQU_FUNC to one or more communication devices CD1, CD2.

"Information regarding the sequence of functions SEQU_FUNC" may mean that the group(s) G, G1, G2, G3, G4 of functions, based on which the algorithm is generated is sent to one or more communication devices CD1, CD2. The respective communication device CD1, CD2 may then, based on the group(s) G, G1, G2, G3, G4 of functions and on the identifier ID, derive the sequence of functions SEQU_FUNC, and encrypt any plaintext in the same way as the cryptographic algorithm would do. When seeking to encrypt any data, the sequence of symbols SEQU_SYMB may be derived from the identifier ID, and the sequence of functions SEQU_FUNC may be selected from the sequence of symbols SEQU_SYMB. When seeking to decrypt data, the derived sequence of functions SEQU_FUNC may be inverted, and the inverted sequence of functions may then be applied.

To illustrate, for a sequence of functions SEQU_FUNC being (f₄, f₁₂, f₁, f₉), the inverted sequence of functions may be (f₉⁻¹, f₁⁻¹, f₁₂⁻¹, f₄⁻¹), where fᵢ⁻¹ is the inverted function of function fᵢ.

In all embodiments mentioned above and hereafter, it is always possible and foreseen that one of the communication devices CD1, CD2 uses the cryptographic algorithm and that at least one other communication device CD1, CD2 uses the cryptographic algorithm and/ or the information regarding the sequence of functions SEQU_FUNC.

In one embodiment, the two communication devices CD1, CD2 may be on a same hierarchical level and/or of the same type. For example, two mobile user devices may each apply the cryptographic algorithm to encrypt and/or decrypt their communication. In another example, two sensors in a house or a vehicle may communicate by encrypting and/or decrypting their communication according to the cryptographic algorithm.

In another embodiment, the communication devices CD1, CD2 may be on different hierarchical levels and/or of different types. For example, a communication device CD1 may be a client communication device and the other communication device CD2 may be a provider communication device, also referred to as server.

In the case in which a provider communication device is in charge of a plurality of client communication devices (for example in a mobile network where SIM cards are provided for a plurality of mobile devices), it is more efficient when the provider communication device does not possess a cryptographic algorithm for each of the client communication devices, but when it has access to the group(s) G, G1, G2, G3, G4 of functions and the identifiers ID of the client communication devices. Then, whenever the provider communication device seeks to communicate with a given client communication device, encryption and/or decryption can be carried out by deriving the sequence of functions SEQU_FUNC from the identifier ID according to the method 100 of figure 2, and by encrypting plaintext and/or decrypting ciphertext according to the derived sequence of functions SEQU_FUNC. This allows for a provider communication device to communicate with a multitude of client communication device on the basis of one group G (or several groups G1, G2, G3, G4) of functions.

The provider communication device may already know the identifiers ID of the client communication devices. In a variant, the client communication devices may send their identifiers ID whenever they communicate with the provider communication device.

The method 100 provides a cryptographic algorithm that increases the security of communication devices CD1, CD2 when they apply the cryptographic algorithm for authentication or for exchanging data.

The increased security is achieved by incorporating a sequence of functions SEQU_FUNC in a singular way in the cryptographic algorithm, i.e. the generated cryptographic algorithm will be unique, and encrypt and/or decrypt differently than other cryptographic algorithms. Even if a given cryptographic algorithm used by a given communication device CD1, CD2 is hacked, the hacker gains no knowledge about other cryptographic algorithms, since each cryptographic algorithm is generated based on the identifier ID of a given communication device CD1.

**Figure 5** shows a flowchart of method 200 for establishing a communication channel COM between two communication devices CD1, CD2, based on the cryptographic algorithm as generated according to the above-mentioned method. The method 200 allows authenticating one or more communication devices CD1, CD2 and transmitting encrypted data.

For the sake of simplicity, secure communication between two communication devices CD1, CD2 is considered. However, the described method 200 is also applicable to secure communication between more than two communication devices.

The cryptographic algorithm may be generated according to the method 100 discussed in relation to figure 2, and then be received (step 105) by each communication device CD1, CD2 among the two communication devices CD1, CD2. Each communication device CD1, CD2 then apply the cryptographic algorithm (step 201) in order to establish the communication channel COM between the two communication devices CD1, CD2.

When applying the cryptographic algorithm to a plaintext in order encrypt this plaintext, the plaintext may be transformed into a binary representation in a preliminary step, i.e. the plaintext may be transformed into a series of "0" and "1", which may then be divided into several portions, here referred to as A, B, C, etc. wherein each portion A, B, C, etc. comprises a portion of the transformed plaintext, i.e. a series of 0 and 1.

The different portions A, B, C, etc. may then be encrypted by application of the cryptographic algorithm.

In one example, in relation to the example of a sequence of functions SEQU_FUNC (f₄, f₁₂, f₁, fg) mentioned earlier, the first function f₄ of the sequence of functions SEQU_FUNC (f₄, f₁₂, f₁, f₉) may comprise the following instructions: A':=A ADD (B XOR C). This means that portions B and C are combined by the XOR-operator, and the result is then added to portion A in order to obtain A'.

The second function f₁₂ of the sequence of functions SEQU_FUNC (f₄, f₁₂, f₁, f₉) may comprise the following instructions: B':= B XOR (A' MUL C). This means that A' and C are multiplied, and portion B and the result of the multiplication are combined by the XOR-operator in order to obtain B'.

All other portions of the plaintext may be transformed in the same way by sequentially applicatying the respective functions of the sequence of functions. The obtained ciphertext A', B', C', etc. may be transmitted to the other communication device CD2.

The advantage of using logical operators to build the functions is that cryptographic algorithms based on these logical functions have similar operating profiles. Therefore, an attacker may have difficulties in deriving the precise sequence of functions from an attack.

Four possible embodiments of the method 200 of figure 5 for establishing a communication channel COM are now presented in relation to figures 6-9, each of these embodiments starting with the reception by at least one of said communication devices CD1, CD2 of a generated cryptographic algorithm (step 150) as previously explained.

In a first embodiment of the method 200 shown in **figure 6****,** the communication channel COM may be established by authenticating the communication devices CD1, CD2. Therefore, a communication device CD1 may send (step 202) a plaintext for authentication purposes, hereafter referred to as authentication plaintext, to the other communication device CD2. Said other communication device CD2 may receive the authentication plaintext and encrypt (step 203) the authentication plaintext. The encrypted authentication plaintext, here referred to as first ciphertext, may be sent (step 204) by said other communication device CD2 to the communication device CD1. The communication device CD1 may also encrypt the authentication plaintext (step 205), by applying the cryptographic algorithm, and obtain an encrypted plaintext, here referred to as second ciphertext. The communication CD1 device may then compare (step 206) the first ciphertext and the second ciphertext. When the first plaintext corresponds to the second plaintext, the authentication may be considered as successful, and the communication channel COM between the communication devices CD1, CD2 may be considered as secure. Otherwise, no communication may be established and/or already established communication may be interrupted.

The authentication may occur as often as necessary and in both directions, i.e. each of the communication devices may be authenticated by the respectively other communication devices.

In a second embodiment of the method 200 shown in **figure 7****,** the communication channel COM may be established by sharing a secret key between both communication devices CD1, CD2. Therefore, a communication device CD1 may send (step 202') a plaintext, here referred to as key-generating plaintext, to the other communication device CD2. Each communication device CD1, CD2 may encrypt the plaintext (step 203', 204') by applying the cryptographic algorithm to obtain a cryptographic key. The cryptographic key may then be used for establishing a communication channel COM between the at least two communication devices CD1, CD2. For example, the cryptographic key may be used for encryption in an efficient cipher algorithm, such as Advanced Encryption Standard (AES).

In a third embodiment of the method 200 shown in **figure 8****,** a communication channel COM is established by authenticating the communication devices CD1, CD2. Therefore a plaintext, here referred to as key plaintext, is encrypted (step 202") by a communication device CD1, by application of the cryptographic algorithm in order to obtain a key ciphertext. The communication device CD1 may then send (step 203") the key ciphertext to the other communication device CD2, which may then decrypt the key ciphertext by application of the cryptographic algorithm (step 204"). The communication channel COM may then be authenticated by comparing (step 205") the decrypted key ciphertext to the key plaintext. This comparaison may be carried out by any of the communication devices CD1, CD2. When the decrypted key ciphertext corresponds to the key plaintext, the authentication may be considered as successful, and the communication channel COM between the communication devices CD1,CD2 may be considered as secure. Otherwise, no communication may be established and/or an already established communication may be interrupted.

In a fourth embodiment of the method 200 shown in **figure 9****,** a communication channel COM is established in order to exchange data. Therefore, a plaintext, here referred to as context plaintext, is encrypted (step 202‴) by application of the cryptographic algorithm by the communication device CD1 to obtain a context ciphertext. The content ciphertext may be sent (step 203‴) to the other communication device CD2, and the content plaintext may be obtained by said other communication device CD2 by decrypting the content ciphertext (step 204‴), in particular by applying a sequence of inverse functions, each corresponding to a function in the sequence of the functions of the cryptographic algorithm.

In particular, in this sequence of inverse functions, these inverse functions may be in a reverse order when compared to the functions in the sequence of functions of the cryptographic algorithm, e.g. a sequence of inverse functions (f₉⁻¹, f₁⁻¹, f₁₂⁻¹, f₄⁻¹) when the content ciphertext has been encrypted with the above example of sequence (f₄, f₁₂, f₁, f₉). However, when some of these functions can commute (i.e. when fᵢ ° fⱼ = fⱼ ° fᵢ in the sequence of functions), their inverse functions may be in the same order as these functions in both sequences, e.g. one can use a sequence of inverse functions (f₄⁻¹, f₁₂⁻¹, f₁⁻¹, f₉⁻¹) when the content ciphertext has been encrypted with the above example of sequence (f₄, f₁₂, f₁, f₉).

In a variant, a context plaintext is encrypted (step 202‴) by application of the cryptographic algorithm, wherein a sequence of inverse functions as defined above may be applied, by the communication device CD1, to obtain a content ciphertext. The content ciphertext may be sent (step 203‴) to the other communication device CD2, and the content plaintext may be obtained by said other communication device CD2 by decrypting the content received ciphertext (step 204‴), by application of the cryptographic algorithm, in particular by applying the corresponding sequence of functions of this cryptographic algorithm.

The first, second, third and fourth embodiments of figures 6 - 9 may be combined with each other. In particular, before exchanging any data, the two communication devices CD1, CD2 may authenticate by implementing a method 200 for establishing a communication channel COM between them.

For example, authentication according to the first embodiment may be carried out, and then the cryptographic key according to the second embodiment may be generated.

In another example, authentication according to the third embodiment may be carried out, and then content may be exchanged as described in the fourth embodiment.

The method 200 as described in relation to figures 5 - 9 allows increasing the security of communication devices performing authentication or exchanging data across a communication channel COM.

For example, the method may be applied to systems based on smart cards (e.g. membership cards in telecommunication networks), or in virtualized environment systems (including containers, virtual network functions, virtual machines), and increase the security of such systems.

**Figure 10** shows a possible embodiment of a first communication device CD1, a second communication CD2 and a configuration algorithm generation device GD configured to implement at least part of the methods 100, 200 described in relation to figures 2 and 5 - 9.

Each of the communication device CD1, CD2 and configuration algorithm generation device GD comprises at least one input interface 301 for receiving messages or instructions, and at least one output interface 302 for communicating with external devices 305.

In particular, each communication device CD1, CD2 may be configured to send an identifier ID assigned to the communication device CD1, CD2 via the output interface 302, and to receive the cryptographic algorithm via the input interface 301.

Each communication device CD1, CD2 may further send, respectively receive encrypted data and/or decrypted data via the input interface 301, respectively the output interface 302.

The cryptographic algorithm generation device GD may receive an indentifier via the input interface 301, and send the cryptographic algorithm via the output interface 302.

Each of the communication device CD1, CD2 and cryptographic algorithm generation device GD further comprises a memory 303 for storing instructions enabling the implementation of at least part of the methods 100, 200, the data received, and temporary data for carrying out the various steps and operations of the methods 100, 200 as described above.

Each of the communication device CD1, CD2 and cryptographic algorithm generation device GD may further comprise a circuit 304, for example:
- a processor able to interpret instructions in the form of a computer program, or
- a circuit board in which the steps of the disclosed methods 100, 200 are described in the silicon, or
- a programmable electronic chip such an FPGA chip ("Field-Programmable Gate Array"), an SOC ("System On Chip"), or an ASIC ("Application Specific Integrated Circuit").

SOCs or systems on a chip are embedded systems that integrate all the components of an electronic system into a single chip. An ASIC is a specialized electronic circuit that groups customized functionalities for a given application. ASICs are generally configured during their manufacture and can be simulated by an operator of the communication device CD1, CD2 and/or cryptographic algorithm generation device GD. FPGA-type programmable logic circuits are electronic circuits that are reconfigurable by the operator of the communication device CD1, CD2 and/or cryptographic algorithm generation device GD.

The communication device CD1, CD2/ cryptographic algorithm generation device GD may be a computer, an electronic component, or another device comprising a processor operably coupled to a memory, as well as, depending on the chosen embodiment, a data storage unit, and other associated hardware elements such as a network interface and a media reader for reading removable storage media and for writing to such media, which are not shown in figure 10.

Depending on the embodiment, the memory 303, the data storage unit, or the removable storage medium contain instructions which, when executed by circuit 304, cause this circuit to carry out or control the at least one input interface 301, the at least one output interface 302, the storage of data in memory 303, and/or the processing of data and/ or the implementation of at least part of the methods 100, 200 according to figures 2 and 5 - 9. The circuit 304 may be a component which implements the control of the communication device CD1, CD2 and/or cryptographic algorithm generation device GD.

In addition, the communication device CD1, CD2 and/or cryptographic algorithm generation device GD may be implemented in software form, in which case it takes the form of a program executable by a processor, or in hardware form, such as an application specific integrated circuit ASIC, a system on chip SOC, or in the form of a combination of hardware and software elements, for example a software program intended to be loaded and executed on an electronic component described above such as an FPGA, processor.

The communication device CD1, CD2 and/or cryptographic algorithm generation device GD may also use hybrid architectures, for example architectures based on a CPU+FPGA, a GPU ("Graphics Processing Unit"), or an MPPA ("Multi-Purpose Processor Array").

This disclosure is not limited to the example devices, methods, uses, and computer program products described above solely by way of example, but encompasses all variants conceivable to the person skilled in the art within the framework of the protection sought.

## Claims

1. A method (100) for generating a cryptographic algorithm for secure communication between at least two communication devices (CD1, CD2), the method (100) comprising:
- sending (101), by a communication device (CD1) among the at least two communication devices (CD1, CD2), an identifier (ID) assigned to the communication device (CD1) to a cryptographic algorithm generation device (GD) ; and
- receiving (105), by the communication device (CD1), a cryptographic algorithm generated by the cryptographic algorithm generation device (GD), the cryptographic algorithm comprising a sequence of functions (SEQU_FUNC) derived from the identifier (ID).

2. The method of claim 1, wherein generating the cryptographic algorithm by the cryptographic algorithm generation device (GD) comprises:
- generating (102) a sequence of symbols (SEQU_SYMB), based on the identifier (ID);
- selecting (103), based on the sequence of symbols (SEQU_SYMB), a sequence of functions (SEQU_FUNC);
- generating (104) the cryptographic algorithm comprising the sequence of functions (SEQU_FUNC).

3. The method of claim 2, wherein determining the sequence of functions (SEQU_FUNC) comprises:
- selecting, in a group (G) of functions, a function for each symbol among the sequence of symbols (SEQU_SYMB).

4. The method of claim 2, wherein determining a sequence of functions (SEQU_FUNC) comprises:
- selecting, in a sequence of groups (G1, G2, G3, G4) of functions, a function for each symbol among the sequence of symbols (SEQU_SYMB).

5. The method of any one of claims 2 - 4, wherein the sequence of symbols (SEQU_SYMB) is generated by a key derivation function, based on the identifier (ID).

6. The method of any one of claims 2 - 5, wherein the cryptographic algorithm is generated by compiling and assembling the selected sequence of functions (SEQU_SYMB).

7. The method of any one of the previous claims, wherein each function comprises one or more logical operators.

8. A method (200) for establishing a communication channel (COM) between the at least two communication devices (CD1, CD2), comprising:
- receiving (105), by the communication device (CD1), a cryptographic algorithm generated according to the method (100) of any one of the previous claims;
- receiving (105), by at least one other communication device (CD2) among the at least two communication devices (CD1, CD2), the cryptographic algorithm and/or information regarding the sequence of functions (SEQU_FUNC);
- establishing (201) a communication channel (COM) between the at least two communication devices (CD1, CD2), by applying, by the communication device (CD1), the cryptographic algorithm, and by applying, by said at least one other communication device (CD2), the cryptographic algorithm and/ or the information regarding the sequence of functions (SEQU_FUNC).

9. The method of claim 8, wherein establishing (201) the communication channel (COM) comprises:
- receiving, by each communication device (CD1, CD2), an authentication plaintext;
- obtaining a first authentication ciphertext by applying (203), by a communication device (CD1) among the at least two communication devices (CD1, CD2), the cryptographic algorithm to the authentication plaintext;
- obtaining a second authentication ciphertext by applying (205), by at least one other communication device (CD2) among the at least two communication devices (CD1, CD2), the cryptographic algorithm and/or the information regarding the sequence of functions (SEQU_FUNC) to the authentication plaintext;
- authenticating the communication channel (COM) between the at least two communication devices (CD1, CD2) by comparing (206) the first authentication ciphertext to the second authentication ciphertext.

10. The method of any one of claims 8 and 9, wherein establishing (201) the authentication channel (COM) comprises:
- receiving, by each communication device (CD1, CD2), a key-generating plaintext;
- determining, by a communication device (CD1) among the at least two communication devices (CD1, CD2), a cryptographic key, by applying (203') the cryptographic algorithm to the key-generating plaintext;
- determining, by at least one other communication device (CD2) among the at least two communication devices (CD1, CD2), the cryptographic key by applying (204') the cryptographic algorithm and/ or the information regarding the sequence of functions (SEQU_FUNC) to the key-generating plaintext;
- using the cryptographic key for establishing a communication channel (COM) between the at least two communication devices (CD1, CD2),

11. The method of any one of claims 8 - 10, wherein establishing (201) the communication channel (COM) comprises:
- obtaining a key ciphertext by applying (202"), by a communication device (CD1) among the at least two communication devices (CD1, CD2) the cryptographic algorithm and/ or the information regarding the sequence of functions (SEQU_FUNC) to a key plaintext;
- sending (203"), by said communication device (CD1), the key ciphertext to at least one other communication device (CD2) among the at least two communication devices (CD1, CD2);
- obtaining, by said at least one other communication device (CD2), a decrypted key ciphertext, by applying (204") the cryptographic algorithm and/ or the information regarding the sequence of functions (SEQU_FUNC) to the key ciphertext;
- authenticating a communication channel (COM) between the at least two communication devices (CD1, CD2) by comparing the decrypted key ciphertext to the key plaintext.

12. The method of any one of claims 8 - 11, wherein establishing (201) the communication channel (COM) comprises:
- obtaining a content ciphertext by applying (202‴), by a communication device (CD1) among the at least two communication devices (CD1, CD2), the cryptographic algorithm and/ or the information regarding the sequence of functions (SEQU_FUNC) to the content plaintext;
- sending (203‴), by said communication device (CD1), the content ciphertext to at least one other communication device (CD2) among the at least two communication devices (CD1, CD2),
- obtaining the content plaintext by applying (204‴), by said at least one other communication device (CD2), the cryptographic algorithm and/ or the information regarding the sequence of functions (SEQU_FUNC) to the content ciphertext.

13. A computer program product comprising instructions which, when the instructions are executed by a processing unit, cause the processing circuit to implement a method of any one of the previous claims.

14. A cryptographic algorithm generation device (GD) configured to generate a cryptographic algorithm for secure communication between at least two communication devices (CD1, CD2), comprising:
- an interface (301) configured to receive an identifier (ID) assigned to a communication device (CD1) among the at least two communication devices (CD1, CD2); and
- a circuit (304) configured to generate a cryptographic algorithm for secure communication between said at least two communication devices (CD1, CD2), the cryptographic algorithm comprising a sequence of functions (SEQU_FUNC) derived from the identifier (ID).

15. A communication device (CD1), comprising:
- an interface (302) configured to send an identifier (ID) assigned to the communication device (CD1) to a cryptographic algorithm generation device (GD); and
- an interface (301) configured to receive, from the cryptographic algorithm generation device (GD), a cryptographic algorithm generated by the cryptographic algorithm generation device (GD), the cryptographic algorithm comprising a sequence of functions (SEQU_FUNC) derived from the identifier (ID).
